# EUROPEAN PATENT SPECIFICATION

(11) **EP 0 785 694 B1**
(45) Date of publication and mention of the grant of the patent: **26.03.2008**
(21) Application number: 97300404.7
(22) Date of filing: 22.01.1997
(51) Int. Cl.: H04Q 7/26

(54) **Private cordless branch exchange system accommodating DECT terminal subscribers**
Private schnurlose Nebenstellenanlage mit DECT-Teilnehmergeräten
Autocommutateur privé "sans fil" avec terminaux d'abonnés en norme DECT

(30) Priority: 22.01.1996 KR 9601275
(43) Date of publication of application: 23.07.1997
(73) Proprietor: SAMSUNG ELECTRONICS CO., LTD., Suwon-City, Kyungki-do (KR)
(72) Inventor: Eun, Jin-Pyo, Seocho-gu, Seoul (KR); Jung, Ki-Sung, Yongin-gun, Kyungki-do, (KR); Kwon, Heon-Sang, Ahnsan-city, Kyungki-do (KR)
(74) Representative: Boakes, Jason Carrington

(56) References cited:
- EP-A- 0 624 995
- BUCKINGHAM C ET AL: "A BUSINESS CORDLESS PABX TELEPHONE SYSTEM ON 800 MHZ BASED ON THE DECT TECHNOLOGY" IEEE COMMUNICATIONS MAGAZINE, vol. 29, no. 1, 1 January 1991, pages 105-110, XP000203327

## Description

### Background to the Invention

The present invention relates in general to a private cordless branch exchange system for providing cordless conversation services in a private branch exchange system, such as a private automatic branch exchange ("PABX") or a key system (or keyphone system).

CT0 and CT1 were the first cordless telephones. Because the cordless telephones CT0 and CT1 employed an analog system, they had difficulty in securing the quality of conversation and the reliability of information transfer between base stations and a portable devices.

Digital cordless telephones CT2 of the common air interface (CAI) standard have been proposed to enhance the conversation quality and information transfer reliability. The cordless telephone CT2 provides a cordless conversation service on the basis of frequency division multiple access (FDMA)/time division duplex (TDD). However, similarly, the cordless telephone CT2 cannot readily provide effective handover and further requires a coupling distributor when a single antenna is used.

DECT is another cordless telephone technique proposed to enhance the conversation quality and information transfer reliability. The DECT is a cordless interface system which has been standardized by the European Telecommunications Standards Institute (ETSI) and provides cordless conversation service on the basis of TDMA/TDD. Such DECT techniques are described in ETS 300 175-1 to 175-9 and in European Patent No. 0486089 (Efficient Carrier Scanning in Terminal), No. 0445887 (Optimization of Beacon Message Transmission in Base Station) and No. 0587225 (Data Transmission through DECT Communication Channel).

A cordless PABX system which can accommodate DECT terminal subscribers in a PABX or a key system and provide a cordless conversation service to the DECT terminal subscribers is known from EP 0 624 995 and also from Buckingham et al., "A business cordless PABX telephone system on 800 MHz based on the DECT technology", 2460 IEEE Communications Magazine, 29(1991) January, no. 1, New York.

Embodiments of the present invention seek to provide a private cordless branch exchange system for providing a cordless conversation service to DECT terminal subscribers.

### Summary of the Invention

In accordance with the present invention, there is provided a private branch exchange system as set forth in claim 1 of the appended claims.

As discussed, the terminals are DECT terminals and the said communication protocol is a DECT protocol.

Such a DECT exchange system can provide seamless handover according to its characteristic and requires no coupling distributor even when a single antenna is used.

The base station interface units comprise a plurality of slave base station interface units and a master base station interface unit; each of the slave base station interface units is adapted to transmit a primitive created as a result of the cluster control functions to the master base station interface unit, to receive a primitive from the master base station interface unit and to perform the cluster control functions on the basis of the received primitive; and the master base station interface unit is adapted to communicate with a the plurality of base stations connected to it to perform data link control layer and network layer functions of the said communications protocol, to communicate with the slave base station interface units to perform the data link control layer and network layer functions of the base stations connected to the slave base station interface control units and to transmit and receive a primitive to/from a central processing unit in the private branch exchange system.

The master base station interface unit may include a main system interface for the private branch exchange system interface; a base station interface; and control means for controlling the interfaces, including a memory having stored therein:
- software for interfacing and communicating with the base stations;
- medium access control layer multi-bearer control software for controlling the multiplexing and management of data through a medium access control layer connection with the terminals communicating with the base stations connected to the master base station interface unit;
- data link control layer processing software for providing a data link to the network layer;
- network layer processing software for processing the network layer; and
- software for interfacing with the slave base station interface units.

Similarly, each of the slave base station interface units may include a main system interface for the private branch exchange system; a base station interface; and control means for controlling the interfaces, including a memory having stored therein:
- software for interfacing and communicating with the base stations;
- medium access control layer multi-bearer control software for controlling the multiplexing and management of data through a medium access control layer connection with the terminals communicating with the base stations connected to the slave base station interface unit; and
- software for interfacing with the master base station interface unit.

Preferably, the base station interface in the master and/or slave base station interface unit is adapted to transmit and receive voice data, protocol process control data and a base station synchronous signal to/from the base stations.

Preferably, the control means in the master and/or slave base station interface unit further includes a database of information regarding the terminals, information regarding the base stations and various parameters necessary to the said communications protocol and the communication with the base stations.

The software for interfacing and communicating with the base stations in the master and/or slave base station interface unit may be LAPB software, LAPD software or asynchronous software.

Preferably, each of the base stations includes a base station interface unit interface; protocol processing means for partially processing the medium access control layer and physical layer of the said communications protocol; voice processing means for processing voice data from the base station interface unit interface, transferring the processed voice data to the protocol processing means, processing voice data from the protocol processing means and transferring the processed voice data to the base station interface unit interface; radio signal processing means for processing radio signals to perform communication between a corresponding base station and a corresponding terminal; and control means for controlling the base station interface unit interface, protocol processing means, voice processing means and radio signal processing means, including a memory in which is stored:
- software for interfacing and communicating with the base station interface unit;
- software for setting up, maintaining and releasing a dummy bearer;
- software for setting up, maintaining and releasing a traffic bearer;
- software for controlling a broadcast message; and
- software for controlling radio transmission and reception.

The base station interface unit interface may be adapted to transmit and receive voice data, protocol process control data and a base station synchronous signal to/from the corresponding base station interface unit.

Preferably, the voice processing means is adapted to receive PCM voice data from the base station interface unit interface, suppress or remove an echo signal from the received PCM voice data, convert the resultant PCM voice data into ADPCM voice data and transfer the converted ADPCM voice data to the protocol processing means; and to receive ADPCM voice data from the protocol processing means, convert the received ADPCM voice data into PCM voice data, suppress or remove an echo signal from the converted PCM voice data and transfer the resultant PCM voice data to the base station interface unit interface.

The control means may further include a database in which is stored an identifier allocated to the corresponding base station and various parameters necessary to the processing of the software.

Preferably, the radio signal processing means includes a modulator for modulating ADPCM voice data from the protocol processing means; a frequency up converter for upping the frequency of data output from the modulator; a first band pass filter for band pass filtering the output signal from the frequency up converter to pass only signal components in a desired frequency band; a power amplifier for amplifying the output signal from the first band pass filter; antennas for propagating the output signal from the power amplifier over the air and receiving a signal over the air; a second band pass filter for band pass filtering a signal received by the antennas to pass only signal components in the said desired frequency band; a low-noise amplifier for low-noise amplifying the output signal from the second band pass filter; a frequency down converter for downing the frequency of the output signal from the low-noise amplifier; and a demodulator for extracting ADPCM voice data from the output signal from the frequency down converter and transferring the extracted ADPCM voice data to the protocol processing means.

The modulator may include a Gaussian filter.

The first and second band pass filters are preferably adapted to pass only signal components in a frequency band of 1.88-1.9 GHz.

The antennas may be constructed in a diversity manner.

### Brief Description of the Drawings

The present invention will now be described by way of example with reference to the accompanying drawings in which:
Fig. 1 is a schematic view of the construction of a private cordless branch exchange system which is implemented to accommodate DECT terminal subscribers;
Fig. 2 is a detailed block diagram illustrating the construction of a base station interface unit in Fig. 1;
Fig. 3 is a detailed block diagram illustrating the construction of a base station in Fig. 1; and
Fig. 4 is a detailed block diagram illustrating the construction of a radio signal processor in Fig. 3.

### Detailed Description of the Preferred Embodiments

Firstly, the general characteristics and protocol architecture of DECT will be mentioned. It should be noted that the following are only a part of ETS 300 175-1 to 175-9.
I. General Characteristics
   - frequency band: 1880-1900MHz
   - number of carriers: 10
   - carrier spacing: 1.728MHz
   - peak transmit power: 250mW
   - carrier multiplex: TDMA (24 slots per frame)
   - frame length: 10ms
   - basic duplexing:
      TDD where the same RF carrier is used for two slots
   - gross bit rate: 1152kbit/s
   - net channel rates:
      32kbit/s (B field (traffic) of each slot) and
      6.4kbit/s (A field (control/signalling) of each slot)
II. Protocol Architecture
   - physical layer (PHL):
      separates a radio spectrum into physical channels at fixed frequency and time domains.
   - medium access control layer (MAC layer):
      selects a desired one of the physical channels and gains or releases interface to the selected physical channel to create, maintain and release a bearer. Also, the MAC layer multiplexes control information with higher-order layer information and error control information into packet information per slot. Further, the MAC layer demultiplexes the packet information into the control information, higher-order layer information and error control information. The functions of the MAC layer may be classified into cluster control functions and cell site control functions.
   - data link control layer (DLC layer):
      performs an interface or release processing function in response to a request from a network layer.
   - network layer (NWK layer):
      exchanges messages for call setup, maintenance and release.

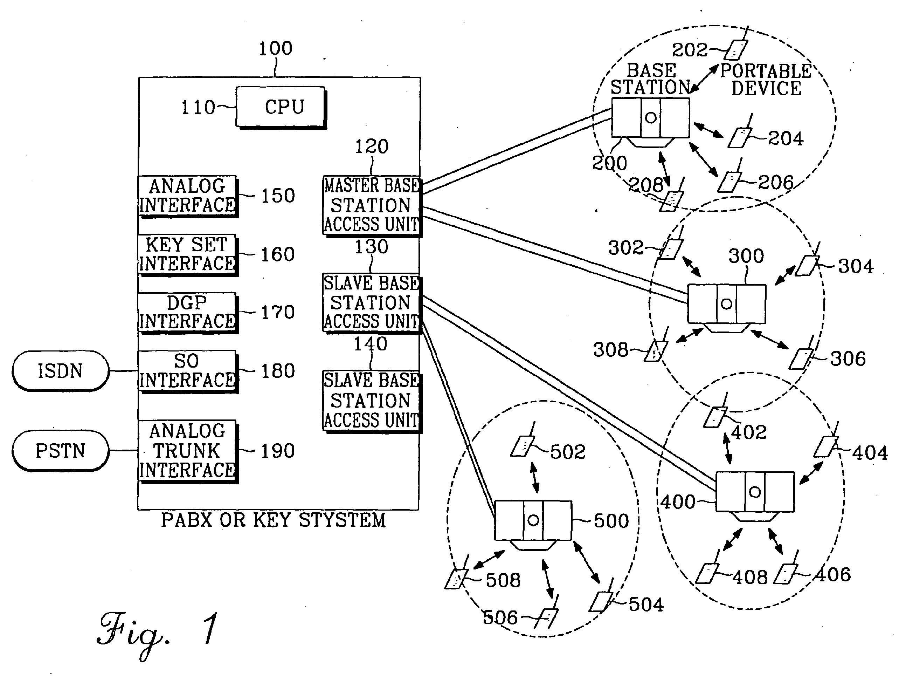

Now, a private cordless branch exchange system for accommodating terminal subscribers of the DECT with the above-mentioned characteristics and protocol architecture in accordance with the present invention will be described with reference to Figs. 1 to 4.

Fig. 1 is a schematic view illustrating the construction of the private cordless branch exchange system in accordance with the present invention. As shown in this drawing, the private cordless branch exchange system basically comprises a PABX or a key system ("main system") 100. The main system 100 is substantially the same in construction as an existing PABX or key system, with the exception that it further comprises one master base station interface unit 120 and a plurality of slave base station interface units 130 and 140. In other words, in the main system 100, an analog interface 150, a key set interface 160, a digital phone (DGP) interface 170, an SO interface 180 and an analog trunk interface 190 are components which can be seen in the existing PABX or key system.

A central processing unit 110 controls the operation of the private cordless branch exchange system which provides a cordless conversation service to the DECT terminal subscribers in accordance with the present invention, in addition to the operation of the existing PABX or key system which provides a conversation service. Although not shown, the main system 100 comprises other components, such as, for example, a switching circuit, a ring detector, a ring generator, a dual tone multi-frequency (DTMF) and etc., necessary to the provision of the conversation service in the existing PABX or key system.

It should be noted that the main system 100 is shown in Fig. 1 to comprise only the CPU 110 and various interfaces 150-190 to subscribers among the components in the existing PABX or key system. In the main system 100, the analog interface 150, key set interface 160 and DGP interface 170 perform interface functions with a standard or general telephone, a keyphone and a digital phone, respectively. The SO interface 180 and analog trunk interface 190 are connected to an integrated services digital network (ISDN) and a public switched telephone network (PSTN) respectively.

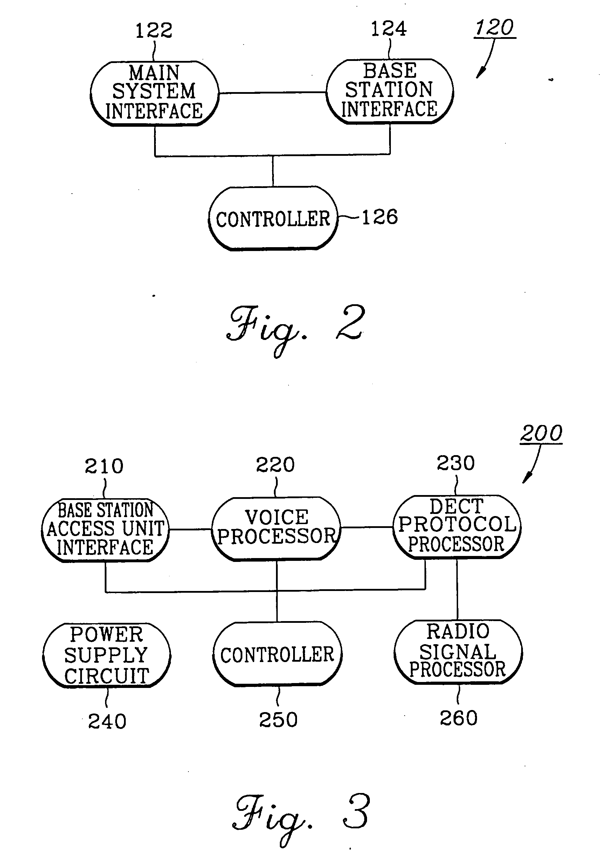

In the preferred embodiment of the present invention, the master base station interface unit 120 and the slave base station interface units 130 and 140 are installed in slots of the main system 100 to provide the cordless conversation service to DECT terminals or portable devices. The master base station interface unit 120 and the slave base station interface units 130 and 140 are the same in construction, as will later be mentioned in detail with reference to Fig. 2. Notably, the CPU 110 sets any one of base station interface units as a master and the remaining base station interface units as slaves. The number of base station interface units can be determined according to design choice. Fig. 1 shows only two slave base station interface units.

A plurality of base stations 200 and 300 are connected to the master base station interface unit 120 by cord and a plurality of base stations 400 and 500 are connected to the slave base station interface unit 130 by cord. A plurality of portable devices 202-208 are connected to the base station 200 by cordless communication and a plurality of portable devices 302-308 are connected to the base station 300 by cordless communication. Also, a plurality of portable devices 402-408 are connected to the base station 400 by cordless communication and a plurality of portable devices 502-508 are connected to the base station 500 by cordless communication.

Each base station communicates with a portable device gaining interface through a radio communication channel to perform the cell site control function of the MAC layer of the DECT protocol. Each slave base station interface unit installed in the slot of the main system 100 communicates with a connected base station to perform the cluster control function of the MAC layer of the DECT protocol with a portable device.

Then, the slave base station interface unit transmits a primitive created as a result of the cluster control function to the master base station interface unit 120. Also, the slave base station interface unit receives a primitive from the master base station interface unit 120 and performs the cluster control function of the MAC layer on the basis of the received primitive.

The master base station interface unit 120 communicates with a connected base station to perform the cluster control function of the MAC layer of the DECT protocol and the functions of the DLC and NWK layers of the DECT protocol with a portable device gaining interface to it. Also, the master base station interface unit 120 communicates with the slave base station interface units to perform the functions of the DLC and NWK layers of the DECT protocol with a portable device connected to that slave base station interface unit. Further, the master base station interface unit 120 receives a primitive from the CPU 110 and converts the received primitive into a DECT protocol. Also, the master base station interface unit 120 performs the converted DECT protocol and transmits the resultant primitive to the CPU 110 to provide the cordless conversation service.

Fig. 2 is a detailed block diagram illustrating the construction of each of the master base station interface unit 120 and slave base station interface units 130 and 140 installed in the main system 100 in Fig. 1. As mentioned above, the master base station interface unit 120 and slave base station interface units 130 and 140 are the same in construction.

As shown in Fig. 2, the base station interface unit includes a main system interface 122 for performing an interfacing operation with the existing PABX or key system, a base station interface 124 for performing an interfacing operation with a base station, and a controller 126 for controlling the main system interface 122 and the base station interface 124.

The main system interface 122 is adapted to transmit and receive voice data and control data to/from the existing PABX or key system. The control data may be transmitted and received in dual port random interface memory (RAM), synchronous communication and asynchronous communication manners. The control data is used to convert a primitive from the main system into a DECT protocol, perform the converted DECT protocol and transmit the resultant primitive to the main system to provide the cordless conversation service. In the slave base station interface unit, the control data is used to transmit and receive a primitive created as a result of the cluster control function of the MAC layer. In the master base station interface unit, the control data is used to transmit and receive a primitive created by processing the DLC and NWK layers.

The base station interface 124 is connected to the base station to transmit and receive voice data, DECT protocol process control data and a base station synchronous signal to/from the base station. Voice data received from the base station is transferred to the main system through the base station interface 124 and main system interface 122. Voice data received from the main system is transferred to the base station through the main system interface 122 and base station interface 124. The base station interface 124 transfers DECT protocol process control data received from the base station to the controller 126. Also, the base station interface 124 transfers control data and synchronous signal received from the controller 126 to the base station.

The controller 126 is adapted to control the entire operation of the base station interface unit. To this end, the controller 126 includes a memory for storing a database and a program necessary to the control of the base station interface unit therein. The program necessary to the control of the master base station interface unit 120 includes software such as, for example, link interface procedures balanced (LAPB) software, link interface procedures on the D-channel (LAPD) software or asynchronous software, for securing interfacing and reliable communication with a base station connected to the master base station interface unit 120; MAC layer multi-bearer control software for controlling the multiplexing and management of all data through an MAC layer connection with a portable device; DLC layer processing software for providing a reliable data link to the NWK layer; an NWK layer processing software for processing the NWK layer which is a main signalling layer of the DECT protocol, software for securing interfacing and reliable communication with the main system; and software for processing an interfacing operation with the slave base station interface unit.

The program necessary to the control of the slave base station interface unit includes software such as, for example, LAPB software, LAPD software or asynchronous software, for securing interfacing and reliable communication with a base station connected to the slave base station interface unit; MAC layer multi-bearer control software for controlling the multiplexing and management of all data through an MAC layer connection with a portable device; and software for processing an interfacing operation with the master base station interface unit.

The database includes information regarding the portable devices, information regarding the slave base station interface units, information regarding the base stations and various parameters necessary to the DECT protocol process and the reliable communication with the base stations.

Fig. 3 is a detailed block diagram illustrating the construction of each base station in Fig. 1. As shown in this drawing, the base station includes a base station interface unit interface 210 for performing an interfacing operation with the base station interface unit, a DECT protocol processor 230 for partially processing the PH layer and MAC layer of the DECT protocol, a voice processor 220 for processing voice data from the base station interface unit interface 210, transferring the processed voice data to the DECT protocol processor 230, processing voice data from the DECT protocol processor 230 and transferring the processed voice data to the base station interface unit interface 210, a controller 250 for controlling the base station interface unit interface 210, voice processor 220 and DECT protocol processor 230, a radio signal processor 260 for processing a radio signal to perform communication between the base station and the portable device, and a power supply circuit 240 for supplying power to the base station.

The base station interface unit interface 210 is connected to the base station interface unit to transmit and receive voice data, DECT protocol process control data and a base station synchronous signal to/from the base station interface unit. The base station interface unit interface 210 transfers voice data received from the base station interface unit to the voice processor 220 and voice data received from the voice processor 220 to the base station interface unit. Also, the base station interface unit interface 210 transfers DECT protocol process control data received from the base station interface unit to the controller 250 and control data received from the controller 250 to the base station interface unit. Furthermore, the base station interface unit interface 210 receives a base station synchronous signal from the base station interface unit and transfers the received base station synchronous signal to the DECT protocol processor 230. Moreover, the base station interface unit interface 210 transfers power from the base station interface unit to the power supply circuit 240.

The voice processor 220 receives pulse code modulation (PCM) voice data from the base station interface unit interface 210, suppresses or removes an echo signal from the received PCM voice data, converts the resultant PCM voice data into adaptive differential pulse code modulation (ADPCM) voice data and transfers the converted ADPCM voice data to the DECT protocol processor 230. Also, the voice processor 220 receives ADPCM voice data from the DECT protocol processor 230, converts the received ADPCM voice data into PCM voice data, suppresses or removes an echo signal from the converted PCM voice data and transfers the resultant PCM voice data to the base station interface unit interface 210.

The DECT protocol processor 230 is adapted to partially process the PH layer and MAC layer of the DECT protocol. Also, the DECT protocol processor 230 transfers the ADPCM voice data received from the voice processor 220 to the radio signal processor 260 and ADPCM voice data received from the radio signal processor 260 to the voice processor 220.

The controller 250 controls the entire operation of the base station. To this end, the controller 250 includes a memory for storing a database and a program necessary to the control of the base station therein. Also, the controller 250 is connected to a maintenance terminal to check the status of the base station as needed. The program necessary to the control of the base station includes software such as, for example, LAPB software, LAPD software or asynchronous software, for securing interfacing and reliable communication with a base station interface unit connected to the base station; software for setting up, maintaining and releasing a dummy bearer; software for setting up, maintaining and releasing a traffic bearer; software for controlling a broadcast message; and software for controlling radio signal transmission and reception. The database includes an identifier (ID) allocated to the base station and various parameters necessary to the process of the software.

The power supply circuit 240 is adapted to perform a direct current (DC)/DC conversion operation with respect to a voltage from the base station interface unit interface 210 or a power adaptor and supply the resultant voltage to the components in the base station.

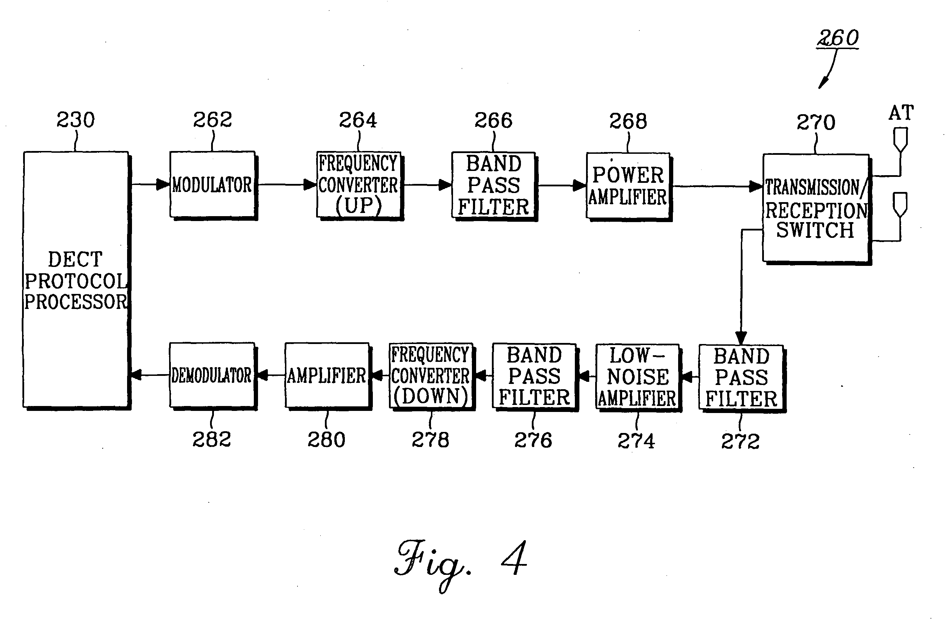

Fig. 4 is a detailed block diagram illustrating the construction of the radio signal processor 260 in Fig. 3. As shown in this drawing, the radio signal processor 260 includes a modulator 262 for modulating the ADPCM voice data from the DECT protocol processor 230. To this end, the modulator 262 is provided with a Gaussian filter. A frequency up converter 264 ups a frequency of output data from the modulator 262 by twice to convert it into an available frequency. A band pass filter 266 is adapted to band pass filter an output signal from the frequency up converter 264 to suppress a signal component beyond a frequency band of 1.88-1.9GHz available in the system. As a result, the band pass filter 266 outputs signal components available in the system with no attenuation and attenuates signal components unnecessary to the system.

A power amplifier 268 is adapted to amplify power of an output signal from the band pass filter 266. The power amplifier 268 is provided with a high-power amplifier for raising the signal power to be transmitted to antennas AT. A transmission/reception switch 270 selects transmission or reception of a radio signal under control of the DECT protocol processor 230.

A band pass filter 272 is adapted to band pass filter a signal received at the antennas AT to suppress signal components beyond the frequency band of 1.88-1.9GHz available in the system. A low-noise amplifier 274 can amplifies a signal of very feeble level received at the antennas AT. To this end, the low-noise amplifier 274 is provided with a low-noise, high-sensitivity amplifier. A band pass filter 276 band pass filters an output signal from the low-noise amplifier 274 to pass only a signal component in the frequency band of 1.88-1.9GHz available in the system. A frequency down converter 278 downs the frequency of an output signal from the band pass filter 276 using a frequency of 110.592MHz to convert it into a frequency suitable for data extraction.

An amplifier 280 amplifies an output signal from the frequency down converter 278. A demodulator 282 is adapted to extract data from a modulated radio signal. Namely, the demodulator 282 extracts ADPCM voice data from an output signal from the amplifier 280 and transfers the extracted ADPCM voice data to the DECT protocol processor 230.

Radio transmission and reception processing operations of the radio signal processor 260 with the above-mentioned construction will now be described in detail under the condition that it is classified into transmission and reception operations.

In the transmission operation, a 1.152Mbps signal from the DECT protocol processor 230 is modulated by the Gaussian filter 262 and then upped by twice in frequency by the frequency up converter 264. The band pass filter 266 removes undesired signal components from the output signal from the frequency up converter 264 and the power amplifier 268 amplifies power of the output signal from the band pass filter 266. The output signal from the power amplifier 268 is propagated over the air through the transmission/reception switch 270 and antennas AT. The antennas AT are constructed in a diversity manner as shown in Fig. 4. As a result, one of the two antennas is used and can be switched to the other according to requirements.

In the reception operation, a signal received at the antennas AT over the air is band pass filtered by the band pass filter 272 which then passes only a signal component in the frequency band of 1.88-1.9GHz available in the system. The output signal from the band pass filter 272 is low-noise amplified by the low-noise amplifier 274 and then band pass filtered by the band pass filter 276 which thus removes undesired band signal components to pass only signal components available in the system. The frequency down converter 278 downs the frequency (1.9GHz) of the output signal from the band pass filter 276 to that suitable for data extraction.

The output signal from the frequency down converter 278 is amplified by the amplifier 280 and then demodulated by the demodulator 282. As a result, the demodulator 282 transfers the demodulated ADPCM voice data to the DECT protocol processor 230.

As is apparent from the above description, according to the present invention, the private cordless branch exchange system accommodates the DECT terminal subscribers in the PABX or key system and provides cordless conversation services to the DECT terminal subscribers. The private cordless branch exchange system of the present invention has the effect of providing seamless handover and processing multiple carriers and multiple slots.

## Claims

1. A private branch exchange system (100) comprising:
base station interface units (120,130,140) adapted to be installed in respective slots of the private branch exchange system (100);
base stations (200,300,400,500) adapted to be connected to the base station interface units (120,130,140); and
DECT terminals (202,204,206,208,302,304,306,308,402, 404,406,408,502,504,506,508) adapted for cordless communication with the base stations;
each of the base stations (200,300,400,500) being adapted to communicate with a plurality of the DECT terminals through radio communication channels to perform cell site control functions of a medium access control layer of a DECT communications protocol; and
each of the base station interface units (120,130,140) being adapted to communicate with a plurality of base stations (200,300,400,500) connected to it to perform cluster control functions of the said medium access control layer; **characterised in that**:
the base station interface units (120,130,140) comprise a plurality of base station interface units configured as slave base station interface units (130,140), and a base station interface unit configured as a master base station interface unit (120); and **in that**
the master base station interface unit (120) is adapted to communicate with the slave base station interface units and adapted to perform data link control layer and network layer functions of the said DECT communications protocol with DECT terminals connected to the slave base station interface units, and is adapted to communicate with a central processing unit (110) in the private branch exchange system (100).

2. A private branch exchange system (100) according to claim 1 in which:
each of the slave base station interface units (130,140) is configured to transmit a primitive created as a result of the cluster control functions to the master base station interface unit (120), to receive a primitive from the master base station interface unit (120) and to perform the cluster control functions on the basis of the received primitive; and
the master base station interface unit is adapted to communicate with the plurality of base stations (200,300) connected to it to perform data link control layer and network layer functions of the said DECT communications protocol, to communicate with the slave base station interface units (130,140) to perform the data link control layer and network layer functions of the base stations (400,500) connected to the slave base station interface units (130,140) and to transmit and receive a primitive to/from the central processing unit (110).

3. A private branch exchange system (100) according to claim 1 or 2 in which the master base station interface unit (120) includes:
a main system interface (122) for the private branch exchange system;
a base station interface (124); and
control means (126) adapted to control the interfaces, including a memory having stored therein:
- software for interfacing and communicating with the base stations (200,300);
- medium access control layer multi-bearer control software for controlling the multiplexing and management of data through a medium access control layer connection with the DECT terminals (202,204,206,208,302,304,306,308) communicating with the base stations (200,300) connected to the master base station interface unit (120);
- data link control layer processing software for providing a data link to the network layer;
- network layer processing software for processing the network layer; and
- software for interfacing with the slave base station interface units (130,140).

4. A private branch exchange system according to any preceding claim in which each of the slave base station interface units (130,140) includes:
a main system interface (122) for the private branch exchange system;
a base station interface (124); and
control means (126) adapted to control the interfaces, including a memory having stored therein:
- software for interfacing and communicating with the base stations (400,500);
- medium access control layer multi-bearer control software for controlling the multiplexing and management of data through a medium access control layer connection with the DECT terminals (402,404,406,408,502,504,506,508) communicating with the base stations (400,500) connected to the slave base station interface unit (130,140); and
- software for interfacing with the master base station interface unit (120).

5. A private branch exchange system according to claim 3 or claim 4 in which the base station interface (124) in the master (120) and/or slave (130,140) base station interface unit is adapted to transmit and receive voice data, protocol process control data and a base station synchronous signal to/from the base stations (200,300,400,500).

6. A private branch exchange system according to any one of claims 3-5 in which the control means (126) in the master and/or slave base station interface unit (120,130,140) further includes a database of information regarding the DECT terminals (202,204,206,208,302,304,306,308,402,404,406,408,502,504, 506,508), information regarding the base stations (200, 300, 400, 500) and various parameters necessary to the said DECT communications protocol and the communication with the base stations (200, 300, 400, 500).

7. A private branch exchange system according to any one of claims 3-6 in which the software for interfacing and communicating with the base stations (200,300,400,500) in the master and/or slave base station interface unit (120,130,140) is LAPB software, LAPD software or asynchronous software.

8. A private branch exchange system according to any one of claims 1-4 in which each of the base stations (200,300,400,500) includes:
a base station interface unit interface (210);
protocol processing means (230) adapted to partially process the medium access control layer and physical layer of the said DECT communications protocol;
voice processing means (220) adapted to process voice data from the base station interface unit interface (210), to transfer the processed voice data to the protocol processing means (230), to process voice data from the protocol processing means (230) and to transfer the processed voice data to the base station interface unit interface (210);
radio signal processing means (260) adapted to process radio signals to perform communication between a corresponding base station and a corresponding DECT terminal; and
control means (250) adapted to control the base station interface unit interface (210), protocol processing means (230), voice processing means (220) and radio signal processing means (260), including a memory in which is stored:
- software for interfacing and communicating with the base station interface unit (120,134,140);
- software for setting up, maintaining and releasing a dummy bearer;
- software for setting up, maintaining and releasing a traffic bearer;
- software for controlling a broadcast message; and
- software for controlling radio transmission and reception.

9. A private branch exchange system according to claim 8 in which the base station interface unit interface (210) is adapted to transmit and receive voice data, protocol process control data and a base station synchronous signal to/from the corresponding base station interface unit (120,130,140).

10. A private branch exchange system according to claim 8 or claim 9 in which the voice processing means (220) is adapted:
to receive PCM voice data from the base station interface unit interface (210), suppress or remove an echo signal from the received PCM voice data, convert the resultant PCM voice data into ADPCM voice data and transfer the converted ADPCM voice data to the protocol processing means (230); and
to receive ADPCM voice data from the protocol processing means (230), convert the received ADPCM voice data into PCM voice data, suppress or remove an echo signal from the converted PCM voice data and transfer the resultant PCM voice data to the base station interface unit interface (210).

11. A private branch exchange system according to any one of claims 8-10 in which the software for interfacing and communicating with the base station interface unit (120,130,140) is LAPB software, LAPD software or asynchronous software.

12. A private branch exchange system according to any one of claims 8-11 in which the control means (250) further includes a database in which is stored an identifier allocated to the corresponding base station (200,300,400,500) and various parameters necessary to the processing of the software.

13. A private branch exchange system according to any one of claims 8-12 in which the radio signal processing means (260) includes:
a modulator (260) adapted to modulate ADPCM voice data from the protocol processing means (230);
a frequency up converter (264) adapted to up the frequency of data output from the modulator (260);
a first band pass filter (266) adapted to band pass filter the output signal from the frequency up converter (264) to pass only signal components in a desired frequency band;
a power amplifier (268) adapted to amplify the output signal from the first band pass filter (266);
antennas (AT) adapted to propagate the output signal from the power amplifier (268) over the air and receiving a signal over the air;
a second band pass filter (272) adapted to band pass filter a signal received by the antennas (AT) to pass only signal components in the said desired frequency band;
a low-noise amplifier (274) adapted to low-noise amplify the output signal from the second band pass filter (272);
a frequency down converter (278) adapted to down the frequency of the output signal from the low-noise amplifier (274); and
a demodulator (282) adapted to extract ADPCM voice data from the output signal from the frequency down converter (278) and to transfer the extracted ADPCM voice data to the protocol processing means (230).

14. A private branch exchange system according to claim 13 in which the modulator (262) includes a Gaussian filter.

15. A private branch exchange system according to claim 13 or claim 14 in which the first and second band pass filters (266,272) are adapted to pass only signal components in a frequency band of 1.88-1.9 GHz.

16. A private branch exchange system according to any one of claims 14-15 in which the antennas (AT) are constructed in a diversity manner.

## Patentansprüche

1. Nebenstellensystem (100), umfassend:
Basisstationsschnittstelleneinheiten (120, 130, 140), die eingerichtet sind, um in jeweiligen Schlitzen (Slots) des Nebenstellensystems (100) installiert zu werden;
Basisstationen (200, 300, 400, 500), die eingerichtet sind, um mit den Basisstationsschnittstelleneinheiten (120, 130, 140) verbunden zu werden, und
DECT-Endgeräte (202, 204, 206, 208, 302, 304, 306, 308, 402, 404, 406, 408, 502, 504, 506, 508), die zur schnurlosen Kommunikation mit den Basisstationen eingerichtet sind;
wobei jede der Basisstationen (200, 300, 400, 500) eingerichtet ist, um mit einer Vielzahl der DECT-Endgeräte über Funkverbindungskanäle zu kommunizieren, um Celle-Site-Steuerfunktionen einer Mediumzugriffs-Steuerungsschicht eines DECT-Kommunikationsprotokolls durchzuführen, und
wobei jede der Basisstationsschnittstelleneinheiten (120, 130, 140) eingerichtet ist, um mit einer Vielzahl mit ihr verbundener Basisstationen (200, 300, 400, 500) zu kommunizieren, um Cluster-Steuerungsfunktionen der Mediumzugriffs-Steuerungsschicht durchzuführen; **dadurch gekennzeichnet, dass**:
die Basisstationsschnittstelleneinheiten (120, 130, 140) eine Vielzahl von Basisstationsschnittstelleneinheiten, die als Slave-Basisstationsschnittstelleneinheiten (130, 140) konfiguriert sind, und eine als Master-Basisstationsschnittstelleneinheit (120) konfigurierte Basisstationsschnittstelleneinheit umfassen; und dadurch, dass die Master-Basisstationsschnittstelleneinheit (120) eingerichtet ist, um mit den Slave-Basisstationsschnittstelleneinheiten zu kommunizieren, und eingerichtet ist, um Datenverbindungssteuerungsschicht- und Netzwerkschichtfunktionen des DECT-Kommunikationsprotokolls mit DECT-Endgeräten, die mit den Slave-Basisstationsschnittstelleneinheiten verbunden sind, durchzuführen, und eingerichtet ist, um mit einer CPU (110) in dem Nebenstellensystem (100) zu kommunizieren.

2. Nebenstellensystem (100) nach Anspruch 1, wobei:
jede der Slave-Basisstationsschnittstelleneinheiten (130, 140) so konfiguriert ist, dass sie ein Primitiv, das als ein Ergebnis von Cluster-Steuerungsfunktionen erzeugt wird, an die Master-Basisstationsschnittstelleneinheit (120) sendet, ein Primitiv von der Master-Basisstationsschnittstelleneinheit (120) empfängt und die Cluster-Steuerungsfunktionen auf der Basis des empfangenen Primitivs durchführt; und
die Master-Basisstationsschnittstelleneinheit eingerichtet ist, um mit der Vielzahl von mit ihr verbundenen Basisstationen (200, 300) zu kommunizieren, um Datenverbindungssteuerungsschicht- und Netzwerkschichtfunktionen des DECT-Kommunikationsprotokolls durchzuführen, um mit den Slave-Basisstationsschnittstelleneinheiten (130, 140) zu kommunizieren, um die Datenverbindungssteuerungsschicht- und Netzwerkschichtfunktionen der mit den Slave-Basisstationsschnittstelleneinheiten (130, 140) verbundenen Basisstationen (400, 500) durchzuführen und um ein Primitiv zu der CPU (110) zu senden und von dieser zu empfangen.

3. Nebenstellensystem (100) nach Anspruch 1 oder 2, wobei die Master-Basisstationsschnittstelleneinheit (120) enthält:
eine Hauptsystemschnittstelle (122) für das Nebenstellensystem;
eine Basisstationsschnittstelle (124), und
eine Steuereinrichtung (126), die zum Steuern der Schnittstellen eingerichtet ist, einen Speicher enthaltend, in dem gespeichert ist:
- Software zum Verbinden und Kommunizieren mit den Basisstationen (200, 300);
- Mediumzugriffs-Steuerungsschicht-Mehrträger-Steuerungssoftware zum Steuern des Multiplexens und Verwaltens von Daten über eine Mediumzugriffs-Steuerungsschichtverbindung mit den DECT-Endgeräten (202, 204, 206, 208, 302, 304, 306, 308), die mit den Basisstationen (200, 300) kommunizieren, die mit der Master-Basisstationsschnittstelleneinheit (120) verbunden sind;
- Datenverbindungssteuerungsschicht-Verarbeitungssoftware zum Bereitstellen einer Datenverbindung zu der Netzwerkschicht;
- Netzwerkschicht-Verarbeitungssoftware zum Verarbeiten der Netzwerkschicht; und
- Software zum Verbinden mit den Slave-Basisstationsschnittstelleneinheiten (130, 140).

4. Nebenstellensystem nach einem der vorhergehenden Ansprüche, wobei jede der Slave-Basisstationsschnittstelleneinheiten (130, 140) enthält:
eine Hauptsystemschnittstelle (122) für das Nebenstellensystem;
eine Basisstationsschnittstelle (124); und
eine Steuereinrichtung (126), die zum Steuern der Schnittstellen eingerichtet ist, einen Speicher enthaltend, in dem gespeichert ist:
- Software zum Verbinden und Kommunizieren mit den Basisstationen (400, 500);
- Mediumzugriffs-Steuerungsschicht-Mehrträger-Steuerungssoftware zum Steuern des Multiplexens und Verwaltens von Daten über eine Mediumzugriffs-Steuerungsschichtverbindung mit den DECT-Endgeräten (402, 404, 406, 408, 502, 504, 506, 508), die mit den Basisstationen (400, 500) kommunizieren, die mit der Slave-Basisstationsschnittstelleneinheit (130, 140) verbunden sind; und
- Software zum Verbinden mit der Master-Basisstationsschnittstelleneinheit (120).

5. Nebenstellensystem nach Anspruch 3 oder Anspruch 4, wobei die Basisstationsschnittstelle (124) in der Master- (120) und/oder der Slave-Basisstationsschnittstelleneinheit (130, 140) eingerichtet ist, um Sprachdaten, Protokollverarbeitungssteuerungsdaten und ein Basisstations-Synchronsignal zu den Basisstationen (200, 300, 400, 500) zu senden und von diesen zu empfangen.

6. Nebenstellensystem nach einem der Ansprüche 3 bis 5, wobei die Steuereinrichtung (126) in der Master- und/oder der Slave-Basisstationsschnittstelleneinheit (120, 130, 140) des Weiteren eine Datenbank aus Informationen in Bezug auf die DECT-Endgeräte (202, 204, 206, 208, 302, 304, 306, 308, 402, 404, 406, 408, 502, 504, 506, 508), Informationen in Bezug auf die Basisstationen (200, 300, 400, 500) und verschiedenen Parametern, die für das DECT-Kommunikationsprotokoll und die Kommunikation mit den Basisstationen (200, 300, 400, 500) erforderlich sind, enthält.

7. Nebenstellensystem nach einem der Ansprüche 3 bis 6, wobei die Software zum Verbinden und zum Kommunizieren mit den Basisstationen (200, 300, 400, 500) in der Master- und/oder der Slave-Basisstationsschnittstelleneinheit (120, 130, 140) LAPB-Software, LAPD-Software oder asynchrone Software ist.

8. Nebenstellensystem nach einem der Ansprüche 1 bis 4, wobei jede der Basisstationen (200, 300, 400, 500) enthält:
eine Basisstationsschnittstelleneinheitsschnittstelle (210);
eine Protokollverarbeitungseinrichtung (230), die eingerichtet ist, um die Mediumzugriffs-Steuerungsschicht und die physikalische Schicht des DECT-Kommunikationsprotokolls teilweise zu verarbeiten;
eine Sprachverarbeitungseinrichtung (220), die eingerichtet ist, um Sprachdaten von der Basisstationsschnittstelleneinheitsschnittstelle (210) zu verarbeiten, die verarbeiteten Sprachdaten zu der Protokollverarbeitungseinrichtung (230) zu übertragen, Sprachdaten von der Protokollverarbeitungseinrichtung (230) verarbeiten und die verarbeiteten Sprachdaten zu der Basisstationsschnittstelleneinheitsschnittstelle (210) zu übertragen;
eine Funksignalverarbeitungseinrichtung (260), die zum Verarbeiten von Funksignalen eingerichtet ist, um Kommunikation zwischen einer entsprechenden Basisstation und einem entsprechenden DECT-Endgerät durchzuführen; und
eine Steuereinrichtung (250), die eingerichtet ist, um die Basisstationsschnittstelleneinheitsschnittstelle (210), die Protokollverarbeitungseinrichtung (230), die Sprachverarbeitungseinrichtung (220) und die Funksignalverarbeitungseinrichtung (260) zu steuern, einen Speicher enthaltend, in dem gespeichert ist:
- Software zum Verbinden und Kommunizieren mit der Basisstationsschnittstelleneinheit (120, 130, 140);
- Software zum Aufbauen, Halten und Freigeben eines Scheinträgers (Dummy Bearer);
- Software zum Aufbauen, Halten und Freigeben einer Sprachverbindung (Traffic Bearer);
- Software zum Steuern einer Rundfunknachricht, und
- Software zum Steuern von Funkübertragung und -empfang.

9. Nebenstellensystem nach Anspruch 8, wobei die Basisstationsschnittstelleneinheitsschnittstelle (210) eingerichtet ist, um Sprachdaten, Protokollverarbeitungssteuerdaten und ein Basisstations-Synchronsignal zu der entsprechenden Basisstationsschnittstelleneinheit (120, 130, 140) zu senden und von dieser zu empfangen,

10. Nebenstellensystem nach Anspruch 8 oder Anspruch 9, wobei die Sprachverarbeitungseinrichtung (220) eingerichtet ist,
um PCM-Sprachdaten von der Basisstationsschnittstelleneinheitsschnittstelle (210) zu empfangen, ein Echosignal von den empfangenen PCM-Sprachdaten zu unterdrücken oder zu entfernen, die resultierenden PCM-Sprachdaten in ADPCM-Sprachdaten umzuwandeln und die umgewandelten ADPCM-Sprachdaten zu der Protokollverarbeitungseinrichtung (230) zu übertragen; und
um ADPCM-Sprachdaten von der Protokollverarbeitungseinrichtung (230) zu empfangen, die empfangenen ADPCM-Sprachdaten in PCM-Sprachdaten umzuwandeln, ein Echosignal von den umgewandelten PCM-Sprachdaten zu unterdrücken oder zu entfernen und die resultierenden PCM-Sprachdaten zu der Basisstationsschnittstelleneinheitsschnittstelle (210) zu übertragen.

11. Nebenstellensystem nach einem der Ansprüche 8 bis 10, wobei die Software zum Verbinden und zum Kommunizieren mit der Basisstationsschnittstelleneinheit (120, 130, 140) LAPB-Software, LAPD-Software oder asynchrone Software ist.

12. Nebenstellensystem nach einem der Ansprüche 8 bis 11, wobei die Steuereinrichtung (250) des Weiteren eine Datenbank enthält, in der eine der entsprechenden Basisstation (200, 300, 400, 500) zugeteilte Kennung und verschiedene Parameter, die zum Verarbeiten der Software erforderlich sind, gespeichert sind.

13. Nebenstellensystem nach einem der Ansprüche 8 bis 12, wobei die Funksignalverarbeitungseinrichtung (260) enthält:
einen Modulator (260), der eingerichtet ist, um ADPCM-Sprachdaten von der Protokollverarbeitungseinrichtung (230) zu modulieren;
einen Frequenz-Aufwärtswandler (264), der eingerichtet ist, um die Frequenz von Daten, die von dem Modulator (260) ausgegeben werden, zu erhöhen;
ein erstes Bandpassfillter (266), das eingerichtet ist, um das Ausgangssignal von dem Frequenz-Aufwärtswandler (264) zu bandpassfiltern, um lediglich Signalkomponenten in einem gewünschten Frequenzband weiterzuleiten;
einen Leistungsverstärker (268), der eingerichtet ist, um das Ausgangssignal von dem ersten Bandpassfilter (266) zu verstärken;
Antennen (AT), die eingerichtet sind, um das Ausgangssignal von dem Leistungsverstärker (268) über die Luft zu verbreiten und ein Signal über die Luft zu empfangen;
ein zweites Bandpassfilter (272), das eingerichtet ist, um ein von den Antennen (AT) empfangenes Signal zu bandpassfiltern, um lediglich Signalkomponenten in dem gewünschten Frequenzband weiterzuleiten;
einen rauscharmen Verstärker (274), der eingerichtet ist, um das Ausgangssignal von dem zweiten Bandpassfilter (272) rauscharm zu verstärken;
einen Frequenz-Abwärtswandler (278), der eingerichtet ist, um die Frequenz des Ausgangssignals von dem rauscharmen Verstärker (274) zu senken; und
einen Demodulator (282), der eingerichtet ist, um ADPCM-Sprachdaten aus dem Ausgangssignal von dem Frequenz-Abwärtswandler (278) zu extrahieren und die extrahierten ADPCM-Sprachdaten zu der Protokollverarbeitungseinrichtung (230) zu übertragen.

14. Nebenstellensystem nach Anspruch 13, wobei der Modulator (262) ein gaußsches Filter enthält.

15. Nebenstellensystem nach Anspruch 13 oder Anspruch 14, wobei das erste und das zweite Bandpassfilter (266, 272) eingerichtet sind, lediglich Signalkomponenten in einem Frequenzband von 1,88 bis 1,9 GHz weiterzuleiten.

16. Nebenstellensystem nach einem der Ansprüche 14 bis 15, wobei die Antennen (AT) auf eine Diversity-Art konstruiert sind

## Revendications

1. Système autocommutateur privé (100) comprenant :
des unités d'interfaçage de stations de base (120, 130, 140) conçues pour être installées dans des connecteurs respectifs du système autocommutateur privé (100) ;
des stations de base (200, 300, 400, 500) conçues pour être connectées aux unités d'interfaçage de stations de base (120, 130, 140) ; et
des terminaux DECT (202, 204, 206, 208, 302, 304, 306, 308, 402, 404, 406, 408, 502, 504, 506, 508) conçus pour une communication sans fil avec les stations de base ;
chacune des stations de base (200, 300, 400, 500) étant conçue pour communiquer avec une pluralité des terminaux DECT sur des canaux de communication radio pour exécuter des fonctions de commande de site cellulaire d'une couche de commande d'accès au support au sein d'un protocole de communication DECT ; et
chacune des unités d'interfaçage de stations de base (120, 130, 140) étant conçue pour communiquer avec une pluralité de stations de base (200, 300, 400, 500) qui lui sont connectées afin d'exécuter des fonctions de commande de regroupement de ladite couche de commande d'accès au support ;
**caractérisé en ce que** :
les unités d'interfaçage de stations de base (120, 130, 140) comprennent une pluralité d'unités d'interfaçage de stations de base configurées en unités esclaves d'interfaçage de stations de base (130, 140) et une unité d'interfaçage de stations de base configurée en unité maîtresse d'interfaçage de stations de base (120) ; et **en ce que** :
l'unité maîtresse d'interfaçage de stations de base (120) est conçue pour communiquer avec les unités d'interfaçage de stations de base, pour exécuter avec des terminaux DECT connectés aux unités esclaves d'interfaçage de stations de base des fonctions de la couche de commande de la liaison de données et de la couche de réseau au sein dudit protocole de communication DECT et pour communiquer avec une unité centrale de traitement (110) dans le système autocommutateur privé (100).

2. Système autocommutateur privé (100) selon la revendication 1, dans lequel :
chacune des unités esclaves d'interfaçage de stations de base (130, 140) est configurée pour émettre une primitive résultant de fonctions de commande de regroupement vers l'unité maîtresse d'interfaçage de stations de base (120), pour recevoir une primitive de l'unité maîtresse d'interfaçage de stations de base (120) et pour exécuter les fonctions de commande de regroupement sur la base de la primitive reçue ; et
l'unité maîtresse d' interfaçage de stations de base est conçue pour communiquer avec la pluralité de stations de base (200, 300) qui lui sont connectées pour exécuter des fonctions de la couche de commande de la liaison de données et de la couche de réseau au sein dudit protocole de communication DECT, pour communiquer avec les unités esclaves d'interfaçage de stations de base (130, 140) afin d'exécuter des fonctions de la couche de commande de la liaison de données et de la couche de réseau des stations de base (400, 500) connectées aux unités esclaves d'interfaçage de stations de base (130, 140) et pour émettre et recevoir une primitive à destination/en provenance de l'unité centrale de traitement (110).

3. Système autocommutateur privé (100) selon la revendication 1 ou 2, dans lequel l'unité maîtresse d'interfaçage de stations de base (120) comprend :
une interface système principale (122) du système autocommutateur privé ;
une interface de stations de base (124) ; et
un moyen de commande (126) conçu pour commander les interfaces et comprenant une mémoire dans laquelle sont stockés :
- un logiciel destiné à l'interfaçage et à la communication avec les stations de base (200, 300) ;
- un logiciel de commande de la couche de commande d'accès au support pour supports de transmission multiples, destiné à commander le multiplexage et la gestion des données sur une connexion de la couche de commande de l'accès au support avec les terminaux DECT (202, 204, 206, 208, 302, 304, 306, 308) qui communiquent avec les stations de base (200, 300) connectées à l'unité maîtresse d'interfaçage de stations de base (120) ;
- un logiciel de traitement de la couche de commande de la liaison de données, destiné à fournir une liaison de données vers la couche de réseau ;
- un logiciel de traitement de la couche de réseau, destiné à traiter la couche de réseau ; et
- un logiciel destiné à l'interfaçage avec les unités esclaves d'interfaçage de stations de base (130, 140).

4. Système autocommutateur privé selon l'une quelconque des revendications précédentes, dans lequel chacune des unités esclaves d'interfaçage de stations de base (130, 140) comprend :
une interface système principale (122) du système autocommutateur privé ;
une interface de stations de base (124) ; et
un moyen de commande (126) conçu pour commander les interfaces et comprenant une mémoire dans laquelle sont stockés :
- un logiciel destiné à l'interfaçage et à la communication avec les stations de base (400, 500) ;
- un logiciel de commande de la couche de commande d'accès au support pour supports de transmission multiples, destiné à commander le multiplexage et la gestion des données sur une connexion de la couche de commande de l'accès au support avec les terminaux DECT (402, 404, 406, 408, 502, 504, 506, 508) qui communiquent avec les stations de base (400, 500) connectées aux unités esclaves d'interfaçage de stations de base (130, 140) ; et
- un logiciel destiné à l'interfaçage avec l'unité maîtresse d'interfaçage de stations de base (120),

5. Système autocommutateur privé selon la revendication 3 ou la revendication 4, dans lequel l'interface de stations de base (124), dans les unités maîtresse (120) et/ou esclaves (130, 140) d'interfaçage de stations de base, est conçue pour émettre et recevoir des données vocales, des données de protocole pour la commande de processus et un signal synchrone de station de base à destination/en provenance des stations de base (200, 300, 400, 500).

6. Système autocommutateur privé selon l'une quelconque des revendications 3 à 5, dans lequel le moyen de commande (126), dans les unités maîtresse (120) et/ou esclaves (130, 140) d'interfaçage de stations de base, comprend en outre une base de données contenant des informations concernant les terminaux DECT (202, 204, 206, 208, 302, 304, 306, 308, 402, 404, 406, 408, 502, 504, 506, 508), des informations concernant les stations de base (200, 300, 400, 500) et différents paramètres nécessaires audit protocole de communication DECT et à la communication avec les stations de base (200, 300, 400, 500).

7. Système autocommutateur privé selon l'une quelconque des revendications 3 à 6, dans lequel le logiciel destiné à l'interfaçage et à la communication avec les stations de base (200, 300, 400, 500), dans les unités maîtresse et/ou esclaves d'interfaçage de stations de base (120, 130, 140), est un logiciel LAPB, un logiciel LAPD ou un logiciel asynchrone.

8. Système autocommutateur privé selon l'une quelconque des revendications 1 à 4, dans lequel chacune des stations de base (200, 300, 400, 500) comprend :
une interface d'unité d'interfaçage de stations de base (210) ;
un moyen de traitement de protocole (230) conçu pour traiter partiellement la couche de commande d'accès au support et la couche physique dudit protocole de communication DECT ;
un moyen de traitement vocal (220) conçu pour traiter des données vocales provenant de l'interface d'unité d'interfaçage de stations de base (210), pour transférer les données vocales traitées au moyen de traitement de protocole (230), pour traiter des données vocales provenant du moyen de traitement de protocole (230) et pour transférer les données vocales traitées à l'interface d'unité d'interfaçage de stations de base (210) ;
un moyen de traitement de signaux radio (260) conçu pour traiter des signaux radio afin de réaliser une communication entre une station de base correspondante et un terminal DECT correspondant ; et
un moyen de commande (250) conçu pour commander l'interface d'unité d'interfaçage de stations de base (210), le moyen de traitement de protocole (230), le moyen de traitement vocal (220) et le moyen de traitement de signaux radio (260) et comprenant une mémoire dans laquelle sont stockés :
- un logiciel destiné à l'interfaçage et à la communication avec l'unité d'interfaçage de stations de base (120, 130, 140) ;
- un logiciel destiné à établir, à maintenir et à libérer un support de transmission fictif ;
- un logiciel destiné à établir, à maintenir et à libérer un support de transmission de trafic ;
- un logiciel destiné à commander un message à diffusion générale ; et
- un logiciel destiné à commander l'émission et la réception radio.

9. Système autocommutateur privé selon la revendication 8, dans lequel l'interface d'unité d'interfaçage de stations de base (210) est conçue pour émettre et recevoir des données vocales, des données de protocole pour la commande de processus et un signal synchrone de station de base à destination/en provenance de l'unité d'interfaçage de stations de base (120, 130, 140) correspondante.

10. Système autocommutateur privé selon la revendication 8 ou 9, dans lequel le moyen de traitement vocal (220) est conçu pour :
recevoir des données vocales PCM provenant de l'interface d'unité d'interfaçage de stations de base (210), supprimer ou annuler un signal d'écho dans les données vocales PCM reçues, convertir les données vocales PCM en résultant en des données vocales ADPCM et transférer les données vocales ADPCM vers le moyen de traitement de protocole (230) ; et
recevoir des données vocales ADPCM du moyen de traitement de protocole (230), convertir les données vocales ADPCM reçues en données vocales PCM, supprimer ou annuler un signal d'écho dans les données vocales PCM converties et transférer les données vocales PCM en résultant vers l'interface d'unité d'interfaçage de stations de base (210).

11. Système autocommutateur privé selon l'une quelconque des revendications 8 à 11, dans lequel le logiciel destiné à l'interfaçage et à la communication avec l'unité d'interfaçage de stations de base (120, 130, 140) est un logiciel LAPB, un logiciel LAPD ou un logiciel asynchrone.

12. Système autocommutateur privé selon l'une quelconque des revendications 8 à 11, dans lequel le moyen de commande (250) comprend en outre une base de données dans laquelle est stocké un identificateur attribué à la station de base (200, 300, 400, 500) correspondante et différents paramètres nécessaires aux traitements du logiciel.

13. Système autocommutateur privé selon l'une quelconque des revendications 8 à 12, dans lequel le moyen de traitement de signaux radio (260) comprend :
un modulateur (260) conçu pour moduler des données vocales ADPCM provenant du moyen de traitement de protocole (230) ;
un convertisseur-élévateur de fréquence (264) conçu pour élever la fréquence des données produites en sortie par le modulateur (260) ;
un premier filtre passe-bande (266) conçu pour appliquer un filtrage passe-bande au signal de sortie du convertisseur-élévateur de fréquences (264) afin de ne laisser passer que les composantes du signal sur une bande de fréquences voulue ;
un amplificateur de puissance (268) conçu pour amplifier le signal de sortie du premier filtre passe-bande (266) ;
des antennes (AT) conçues pour rayonner le signal de sortie provenant de l'amplificateur de puissance (268) dans l'atmosphère et pour recevoir un signal de l'atmosphère ;
un second filtre passe-bande (272) conçu pour appliquer un filtrage passe-bande au signal reçu par les antennes (AT) afin de ne laisser passer que des composantes de signal sur ladite bande de fréquences voulue ;
un amplificateur à faible bruit (274) conçu pour amplifier à faible bruit le signal de sortie du second filtre passe-bande (272) ;
un convertisseur-abaisseur de fréquence (278) conçu pour abaisser la fréquence du signal de sortie de l'amplificateur à faible bruit (274) ; et
un démodulateur (282) conçu pour extraire des données vocales ADPCM du signal de sortie du convertisseur-abaisseur de fréquence (278) et pour transférer les données vocales ADPCM extraites vers le moyen de traitement de protocole (230).

14. Système autocommutateur privé selon la revendication 13, dans lequel le modulateur (262) comprend un filtre gaussien.

15. Système autocommutateur privé selon la revendication 13 ou la revendication 14, dans lequel le premier et le second filtre passe-bande (266, 272) sont conçus pour ne laisser passer que des composantes du signal sur une bande de fréquences de 1,88 à 1,9 GHz.

16. Système autocommutateur privé selon l'une quelconque des revendications 14 et 15, dans lequel les antennes (AT) sont construites en diversité.
